(19) Europäisches Patentamt / European Patent Office / Office européen des brevets

(11) **EP 3 615 894 B1**

(12) **FASCICULE DE BREVET EUROPEEN**

(45) Date de publication et mention
de la délivrance du brevet:
**11.05.2022 Bulletin 2022/19**

(21) Numéro de dépôt: **18713290.7**

(22) Date de dépôt: **30.03.2018**

(51) Classification Internationale des Brevets (IPC):
**G01F 1/66** *(2022.01)* **G01F 25/00** *(2022.01)*
**G01F 1/708** *(2022.01)* **G01F 15/02** *(2006.01)*

(52) Classification Coopérative des Brevets (CPC):
**G01F 1/7082; G01F 1/662; G01F 1/668;**
**G01F 15/02; G01F 25/10**

(86) Numéro de dépôt international:
**PCT/EP2018/058352**

(87) Numéro de publication internationale:
**WO 2018/197159 (01.11.2018 Gazette 2018/44)**

(54) **PROCEDE DE MESURE D'UNE VITESSE D'UN FLUIDE**

VERFAHREN ZUR MESSUNG EINER GESCHWINDIGKEIT EINES FLUIDS

METHOD FOR MEASURING A SPEED OF A FLUID

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **25.04.2017 FR 1753548**

(43) Date de publication de la demande:
**04.03.2020 Bulletin 2020/10**

(73) Titulaire: **Sagemcom Energy & Telecom SAS**
**92500 Rueil-Malmaison (FR)**

(72) Inventeur: **TEBOULLE, Henri**
**92500 Rueil Malmaison (FR)**

(74) Mandataire: **Lavaud, Thomas et al**
**Cabinet Boettcher**
**16, rue Médéric**
**75017 Paris (FR)**

(56) Documents cités:
WO-A1-2018/011371       US-A- 4 003 252
US-A1- 2002 143 480     US-A1- 2003 136 193
US-A1- 2012 266 676

**Description**

L'invention concerne le domaine des procédés de mesure d'une vitesse d'un fluide.

ARRIERE PLAN DE L'INVENTION

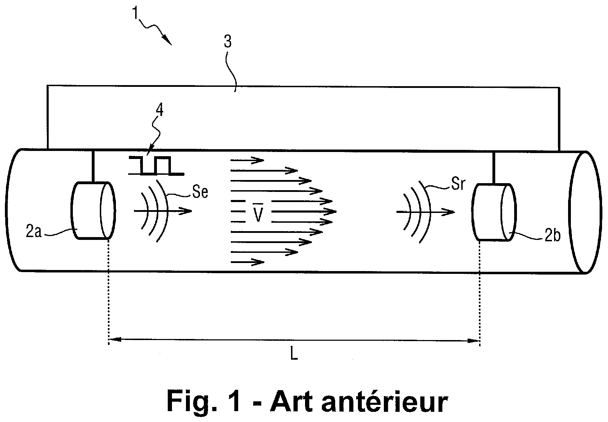

Un compteur de fluide à ultrason utilise classiquement, pour mesurer un débit d'un fluide circulant dans un tuyau, un dispositif de mesure de la vitesse du fluide par émission et réception de signaux ultrasonores de mesure.
Le dispositif de mesure comporte un conduit, raccordé au tuyau, dans lequel circule le fluide. Pour mesurer la vitesse du fluide, on émet dans le conduit un signal ultrasonore de mesure parcourant un trajet de longueur définie, on mesure les temps de trajet mis par le signal ultrasonore de mesure pour parcourir le trajet de longueur définie d'amont en aval et d'aval en amont, et on estime la vitesse du fluide à partir notamment de la longueur définie et de la différence entre les temps de trajet.
Un tel dispositif de mesure 1, parfois désigné par les termes anglais *classical pipe,* est visible sur la figure 1. Le dispositif de mesure 1 comporte un premier transducteur 2a, un deuxième transducteur 2b, et un module de mesure 3 relié au premier transducteur 2a et au deuxième transducteur 2b.
Le premier transducteur 2a et le deuxième transducteur 2b sont appairés en fréquence et en niveau d'émission. Le premier transducteur 2a et le deuxième transducteur 2b sont par exemple des transducteurs piézoélectriques.
Le trajet de longueur définie est donc un trajet rectiligne de longueur L entre le premier transducteur 2a et le deuxième transducteur 2b.
Le premier transducteur 2a émet un signal ultrasonore de mesure Se. Le signal ultrasonore de mesure Se est par exemple généré à partir d'un signal rectangulaire 4. Le deuxième transducteur 2b reçoit un signal ultrasonore Sr résultant de la propagation dans le fluide du signal ultrasonore de mesure Se.
Le module de mesure 3 mesure le temps de trajet mis par le signal ultrasonore de mesure Se pour parcourir le trajet de longueur définie d'amont en aval. Le module de mesure 3 mesure en réalité un temps de transfert global $T_{AB}$ du premier transducteur 2a vers le deuxième transducteur 2b.
Le temps de transfert global $T_{AB}$ est tel que :

$$T_{AB} = TA_A + ToF_{AB} + TR_B,$$

où :

- $TA_A$ est un temps d'allumage du premier transducteur 2a ;
- $ToF_{AB}$ correspond au *Time of Flight* (« Temps de Vol », en français) mis par le signal ultrasonore de mesure Se pour parcourir le trajet de longueur définie entre le premier transducteur 2a et le deuxième transducteur 2b ;
- $TR_B$ est un temps de réception du deuxième transducteur 2b.

De même, le deuxième transducteur 2b émet un signal ultrasonore de mesure qui est reçu par le premier transducteur 2a.
Le module de mesure 3 mesure ainsi un temps de transfert global $T_{BA}$ du deuxième transducteur 2b vers le premier transducteur 2a.
Le module de mesure 3 calcule alors la vitesse moyenne $\overline{V}$ du fluide en utilisant la formule :
$\Delta T = T_{BA} - T_{AB} = (\overline{V}.2L)/c^2$, où c est la vitesse d'une onde ultrasonore dans le fluide. Par exemple, la vitesse d'une onde ultrasonore dans l'eau est égale à environ 1500m/s, et dépend de la température de l'eau.
La durée de vie d'un compteur de fluide à ultrason est typiquement comprise entre 15 et 20 ans. Au cours de cette durée de vie, les composants du premier transducteur 2a et du deuxième transducteur 2b subissent les effets du vieillissement. En particulier, les temps de réception du premier transducteur 2a et du deuxième transducteur 2b ont tendance à dériver, ce qui diminue la précision de la mesure de la vitesse du fluide.
Le document US 2012266676-A1 décrit un procédé et un dispositif pour une mesure de la différence de temps de propagation d'ultrasons dans un débitmètre à ultrasons utilisant deux transducteurs. Il décrit de compenser les processus de vieillissement et les retards dus au comportement de réponse des transducteurs en effectuant une évaluation différentielle des impulsions sonores transmises dans des directions opposées.

OBJET DE L'INVENTION

L'invention a pour objet de compenser une dérive de mesure subie par un compteur de fluide à ultrason et due au vieillissement des transducteurs du compteur de fluide à ultrason.

RESUME DE L'INVENTION

En vue de la réalisation de ce but, on propose un procédé de mesure d'une vitesse d'un fluide, mis en œuvre par un compteur de fluide à ultrason comportant un conduit, deux transducteurs intégrés dans le conduit, un miroir réflecteur positionné entre les deux transducteurs, et des moyens de traitement, les transducteurs et le miroir réflecteur présentant chacun une forme annulaire qui épouse une paroi interne du conduit, le procédé de mesure comportant des phases de mesure comprenant chacune des étapes de mesure au cours desquelles :

- l'un des deux transducteurs émet un signal ultrasonore de mesure ;
- l'autre des deux transducteurs reçoit le signal ultrasonore de mesure après qu'il ait parcouru un trajet de mesure ;
- les moyens de traitement évaluent la vitesse du fluide en fonction d'un temps de trajet de mesure mis par le signal ultrasonore de mesure pour parcourir le trajet de mesure ;

le procédé de mesure comportant en outre des phases de compensation comprenant chacune des étapes de compensation au cours desquelles :

- l'un des deux transducteurs émet un signal ultrasonore de compensation ;
- ledit transducteur reçoit le signal ultrasonore de compensation après qu'il ait parcouru un trajet de

compensation au cours duquel il a été réfléchi par le miroir réflecteur ;

- les moyens de traitement compensent une dérive de mesure dudit transducteur en ajustant le temps de trajet de mesure en fonction d'un temps de trajet de compensation mis par le signal ultrasonore de compensation pour parcourir le trajet de compensation.

L'ajustement du temps de trajet de mesure permet de compenser une dérive de mesure subie par le compteur de fluide à ultrason et due au vieillissement des transducteurs du compteur de fluide à ultrason.

On propose de plus un procédé de mesure tel que celui qui vient d'être décrit, dans lequel le compteur de fluide à ultrason comporte en outre un capteur de température, et dans lequel les moyens de traitement ajustent aussi le temps de trajet de mesure en fonction d'une température de mesure du fluide au cours de la phase de mesure.

On propose de plus un procédé de mesure tel que celui qui vient d'être décrit, dans lequel le compteur de fluide à ultrason comporte en outre une mémoire dans laquelle est stockée une table de référence comprenant des valeurs de température de référence et, pour chaque valeur de température de référence, un temps de référence mis par un signal ultrasonore de référence pour parcourir le trajet de compensation alors que le vieillissement des transducteurs est négligeable, et dans lequel l'ajustement du temps de trajet de mesure consiste à extraire de la table de référence un temps de référence correspondant à une température de référence identique à la température de mesure, et à ajouter ou à retrancher au temps de trajet de mesure une différence entre le temps de trajet de compensation et le temps de référence.

On propose de plus un procédé de mesure tel que celui qui vient d'être décrit, dans lequel les phases de compensation comportent des phases d'apprentissage au cours desquelles :

- le capteur de température mesure la température du fluide et produit des températures de référence ;
- pour chaque température de référence, les moyens de traitement mesurent le temps de référence mis par le signal ultrasonore de référence pour parcourir le trajet de compensation, et intègrent dans la table de référence la température de référence et le temps de référence.

On propose de plus un procédé de mesure tel que celui qui vient d'être décrit, dans lequel les phases d'apprentissage sont mises en œuvre pendant une période préliminaire de durée prédéterminée, qui débute suite à une installation du compteur de fluide à ultrason.

On propose de plus un procédé de mesure tel que celui qui vient d'être décrit, dans lequel la table de référence est remplie préalablement à une installation du compteur de fluide à ultrason.

On propose aussi un compteur de fluide à ultrason comportant un conduit dans lequel sont intégrés deux transducteurs et un miroir réflecteur positionné entre les deux transducteurs, et des moyens de traitement agencés pour mettre en œuvre le procédé de mesure qui vient d'être décrit, les transducteurs et le miroir réflecteur présentant chacun une forme annulaire qui épouse une paroi interne du conduit.

On propose de plus un compteur tel que celui qui vient d'être décrit, comportant deux miroirs réflecteurs, chaque miroir réflecteur étant positionné à proximité de l'un des transducteurs.

On propose de plus un compteur tel que celui qui vient d'être décrit, dans lequel les transducteurs sont des transducteurs piézoélectriques.

On propose de plus un compteur tel que celui qui vient d'être décrit, dans lequel une largeur de chaque transducteur est comprise entre 8% et 12% d'un diamètre interne du conduit, et dans lequel une largeur du miroir réflecteur est comprise entre 3% et 5% du diamètre interne du conduit.

On propose aussi un programme d'ordinateur comprenant des instructions pour mettre en œuvre, par le compteur de fluide à ultrasons décrit, le procédé de mesure qui vient d'être décrit.

On propose de plus des moyens de stockage qui stockent un programme d'ordinateur comprenant des instructions pour mettre en œuvre, par le compteur de fluide à ultrasons décrit, le procédé de mesure qui vient d'être décrit.

D'autres caractéristiques et avantages de l'invention ressortiront à la lecture de la description qui suit d'un mode de réalisation particulier non limitatif de l'invention.

BREVE DESCRIPTION DES DESSINS

Il sera fait référence aux dessins annexés, parmi lesquels :

- la figure 1 représente un compteur de fluide à ultrason selon l'art antérieur ;
- la figure 2 représente un compteur de fluide à ultrason dans lequel est mis en œuvre le procédé de mesure selon l'invention ;
- la figure 3 représente un conduit d'un dispositif de mesure du compteur de fluide à ultrason dans lequel est mis en œuvre le procédé de mesure selon l'invention, le conduit étant vu en coupe selon un plan perpendiculaire à un axe du conduit ;
- la figure 4 représente un signal ultrasonore de mesure reçu après qu'il ait parcouru un trajet de longueur définie ;
- la figure 5 représente un premier temps de transfert local $TL_A$ entre un premier transducteur et lui-même ;
- la figure 6 représente des étapes du procédé de mesure selon l'invention.

DESCRIPTION DETAILLEE DE L'INVENTION

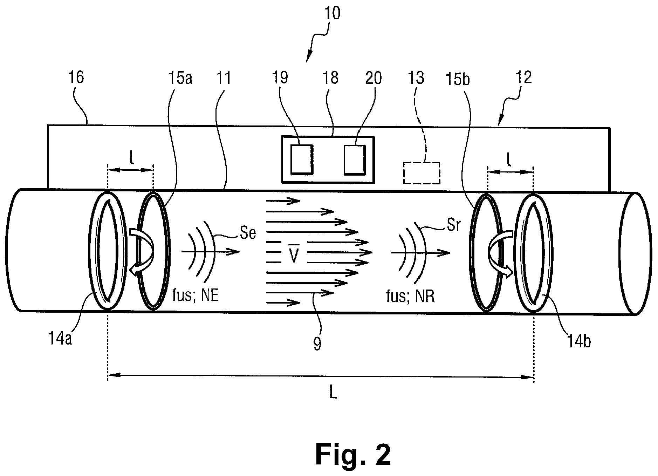

En référence à la figure 2, le procédé de mesure d'une vitesse d'un fluide selon l'invention est ici mis en œuvre dans un compteur d'eau à ultrason 10.

Le compteur d'eau à ultrason 10 comporte un conduit 11 dans lequel circule de l'eau fournie par un réseau de distribution à une installation, un dispositif de mesure de la vitesse de l'eau 12, ainsi qu'un capteur de température 13 qui mesure la température de l'eau dans le conduit 11.

L'eau circule dans le conduit 11 d'amont en aval, comme cela est indiqué par le sens des flèches 9 visibles sur la figure 2. L'eau pourrait tout aussi bien circuler d'aval en amont, la vitesse moyenne $\overline{V}$ du fluide étant négative dans ce cas.

Le dispositif de mesure 12 comporte un premier transducteur 14a, un deuxième transducteur 14b, un premier miroir réflecteur 15a, un deuxième miroir réflecteur 15b et un module de mesure 16.

Le premier transducteur 14a et le deuxième transducteur 14b sont appairés. Le premier transducteur 14a et le deuxième transducteur 14b sont ici des transducteurs piézoélectriques.

Le premier transducteur 14a et le deuxième transducteur 14b sont espacés d'une longueur définie L.

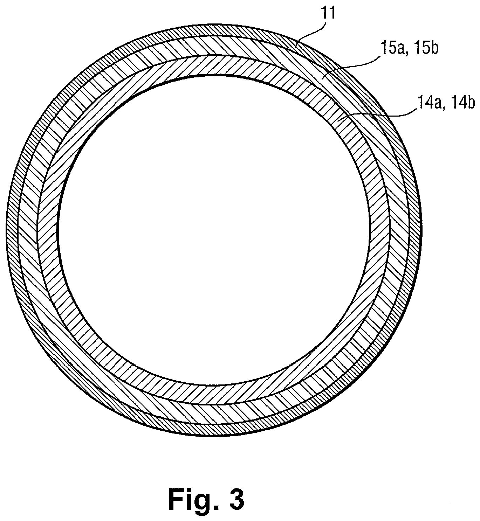

En référence à la figure 3, le premier transducteur 14a et le deuxième transducteur 14b présentent chacun une forme annulaire qui épouse une paroi interne du conduit 11.

La largeur du premier transducteur 14a et du deuxième transducteur 14b (c'est-à-dire la différence entre le diamètre externe et le diamètre interne du premier transducteur 14a et du deuxième transducteur 14b) est comprise entre 8% et 12% du diamètre interne du conduit 11. Ici, la largeur du premier transducteur 14a et du deuxième transducteur 14b est égale à 10% du diamètre interne du conduit 11.

Le premier transducteur 14a et le deuxième transducteur 14b comportent chacun un corps métallique, ici fabriqué en acier inoxydable, qui renferme un anneau piézoélectrique. Les corps métalliques du premier transducteur 14a et du deuxième transducteur 14b sont vissés au conduit 11.

Le premier miroir réflecteur 15a et le deuxième miroir réflecteur 15b présentent eux aussi chacun une forme annulaire qui épouse la paroi interne du conduit 11.

Le premier miroir réflecteur 15a et le deuxième miroir réflecteur 15b sont tous deux positionnés entre le premier transducteur 14a et le deuxième transducteur 14b.

Le premier miroir réflecteur 15a est situé à proximité du premier transducteur 14a, et le deuxième miroir réflecteur 15b est situé à proximité du deuxième transducteur 14b. Le premier miroir réflecteur 15a est situé à une distance 1, ici égale à 6mm, du premier transducteur 14a, et le deuxième miroir réflecteur 15b est ici situé à une distance 1, ici égale à 6mm, du deuxième transducteur 14b.

La largeur du premier miroir réflecteur 15a et du deuxième miroir réflecteur 15b est comprise entre 3% et 5% du diamètre interne du conduit 11. Ici, la largeur du premier miroir réflecteur 15a et du deuxième miroir réflecteur 15b est égale à 4% du diamètre interne du conduit 11.

Le premier miroir réflecteur 15a et le deuxième miroir réflecteur 15b sont fabriqués en aluminium et sont vissés au conduit 11. Le conduit 11 présente deux zones de diamètre réduit formant des épaulements. Lors de la fabrication du compteur d'eau à ultrason 10, le premier miroir réflecteur 15a et le deuxième miroir réflecteur 15b sont introduits dans le conduit 11 et viennent chacun en butée contre l'un des épaulements avant d'être vissés au conduit 11. On assure ainsi un positionnement longitudinal précis du premier miroir réflecteur 15a et du deuxième miroir réflecteur 15b à l'intérieur du conduit 11.

On note que les transducteurs 14 et les miroirs réflecteurs 15 sont vissés depuis l'extérieur du conduit 11 via des trous filetés pratiqués dans l'épaisseur du conduit 11. On assure l'étanchéité du conduit 11 en appliquant une résine au niveau des vis et des trous filetés.

Le module de mesure 16 comprend des moyens de traitement 18 comportant un composant de traitement 19 « intelligent » adapté à exécuter des instructions d'un programme pour mettre en œuvre les différentes étapes du procédé de mesure selon l'invention. Le composant de traitement 19 est ici un microcontrôleur, mais pourrait être un composant différent, par exemple un processeur ou un FPGA. Les moyens de traitement 18 comportent aussi une mémoire 20.

Les moyens de traitement 18 sont notamment agencés pour piloter le premier transducteur 14a et le deuxième transducteur 14b, pour acquérir des signaux électriques produits par le premier transducteur 14a et le deuxième transducteur 14b, pour traiter ces signaux électriques, etc.

On décrit tout d'abord la manière dont sont réalisées les mesures de la vitesse de l'eau par le dispositif de mesure 12 du compteur d'eau à ultrason 10.

Le premier transducteur 14a et le deuxième transducteur 14b remplissent chacun successivement la fonction d'un émetteur de signaux ultrasonores de mesure, et la fonction d'un récepteur de signaux ultrasonores de mesure.

Les moyens de traitement 18 fournissent ainsi à l'émetteur des signaux électriques que celui-ci transforme en signaux ultrasonores de mesure Se. Les signaux électriques sont ici des signaux rectangulaires. Les moyens de traitement 18 acquièrent les signaux ultrasonores de mesure Sr reçus par le récepteur.

L'émetteur émet les signaux ultrasonores de mesure Se à une fréquence d'émission fus. La fréquence fus est ici comprise entre 900kHz et 4MHz.

Les signaux ultrasonores de mesure Se parcourent ainsi, entre le premier transducteur 14a et le deuxième transducteur 14b, un trajet de mesure de longueur définie L d'amont en aval et d'aval en amont. Le trajet de mesure est ici un trajet rectiligne entre le premier transducteur 14a et le deuxième transducteur 14b.

Sur la figure 2, on a représenté le premier transducteur 14a remplissant la fonction d'un émetteur et le deuxième transducteur 14b remplissant la fonction d'un récepteur. Le signal ultrasonore de mesure Se parcourt donc le trajet de mesure d'amont en aval. Le signal ultrasonore de mesure Se est émis par l'émetteur avec un niveau NE. Le signal ultrasonore de mesure reçu Sr est reçu par le récepteur avec un niveau NR inférieur au niveau NE.

Le procédé de mesure selon l'invention comporte des phases de mesures, répétées à intervalles réguliers.

Au cours de chaque phase de mesure, les moyens de traitement 18 mesurent un temps de trajet de mesure d'amont en aval mis par le signal ultrasonore de mesure Se pour parcourir le trajet de mesure d'amont en aval, puis mesurent un temps de trajet de mesure d'aval en amont mis par le signal ultrasonore de mesure Se pour parcourir le trajet de mesure d'aval en amont, puis enfin évaluent la vitesse de l'eau en fonction de ces temps de trajet de mesure.

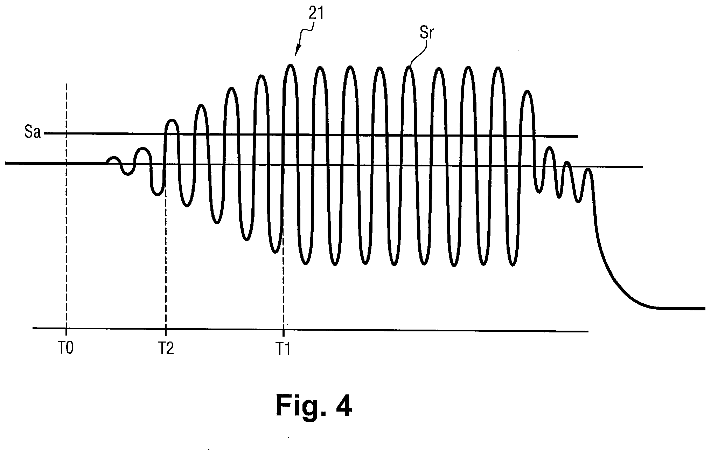

La figure 4 représente un signal ultrasonore de mesure reçu Sr, qui est reçu par le récepteur après avoir parcouru le trajet de mesure (d'amont en aval ou d'aval en amont).

Le récepteur active la réception à un moment T0, synchronisé avec l'émission du signal ultrasonore de mesure Se. L'appairage de l'émetteur et du récepteur, ainsi que le fait que le module de mesure 16 contrôle les deux transducteurs ultrasoniques, rendent possible cette synchronisation.

La mesure du temps de trajet de mesure est obtenue à partir de la détermination d'un moment de survenue T1 d'un lobe prédéterminé 21 du signal ultrasonore de mesure reçu Sr.

Le moment de survenue T1 est ici l'instant où survient un front montant du lobe prédéterminé 21. Le moment de survenue T1 est mesuré par une méthode du type « Zéro Crossing ».

Le lobe prédéterminé 21 est un j$^{ième}$ lobe du signal ultrasonore de mesure reçu Sr après qu'une amplitude du signal ultrasonore de mesure reçu Sr ait dépassé, au temps T2, un seuil d'amplitude prédéterminé Sa. Le j$^{ième}$ lobe est en l'occurrence ici le quatrième lobe.

La vitesse de l'eau est ensuite évaluée par les moyens de traitement 18 en fonction d'une mesure du temps de trajet de mesure d'amont en aval et d'une mesure du temps de trajet de mesure d'aval en amont.

La vitesse de l'eau est proportionnelle à une différence entre la mesure du temps de trajet de mesure d'aval en amont et la mesure du temps de trajet de mesure d'amont en aval.

On note que la vitesse de l'eau mesurée est ici une vitesse moyenne de l'eau dans le diamètre du conduit 11, la vitesse des masses d'eau étant en effet différente au centre du conduit 11 et à proximité des parois du conduit 11.

On note aussi que la forme annulaire des transducteurs 14 et des miroirs réflecteurs 15 joue le rôle d'un régulateur de l'eau dans le conduit 11, et permet de produire des mesures de vitesse de l'eau dans de bonnes conditions de stabilité du flux d'eau.

Outre les phases de mesure, le procédé de mesure selon l'invention comporte des phases de compensation qui sont destinées à compenser des dérives de mesure dues au vieillissement du premier transducteur 14a et du deuxième transducteur 14b.

On décrit tout d'abord le principe général de la compensation.

Comme cela vient d'être dit, la vitesse moyenne de l'eau dans le conduit 11 est évaluée à partir de la mesure du temps de trajet de mesure d'amont en aval et de la mesure du temps de trajet de mesure d'aval en amont.

Or, le « temps de trajet de mesure », qui est mesuré par le premier transducteur 14a et le deuxième transducteur 14b, est en réalité un temps de transfert global.

Le temps de transfert global d'amont en aval $T_{AB}$ est tel que :

$$T_{AB} = TA_A + ToF_{AB} + TR_B,$$

où :

- $TA_A$ est un temps d'allumage du premier transducteur 14a ;
- $ToF_{AB}$ correspond au *Time of Flight* (« Temps de Vol », en français) mis par le signal ultrasonore de mesure Se pour parcourir le trajet de mesure entre le premier transducteur 14a et le deuxième transducteur 14b ;
- $TR_B$ est un temps de réception du deuxième transducteur 14b.

Le temps de transfert global d'aval en amont $T_{BA}$ est tel que :

$$T_{BA} = TA_B + ToF_{BA} + TR_A,$$

où :

- $TA_B$ est un temps d'allumage du deuxième transducteur 14b ;
- $ToF_{BA}$ correspond au *Time of Flight* (« Temps de Vol», en français) mis par le signal ultrasonore de mesure Se pour parcourir le trajet de mesure entre le deuxième transducteur 14b et le premier transducteur 14a ;
- $TR_A$ est un temps de réception du premier transducteur 14a.

La vitesse de l'eau est donc estimée à partir de la différence :

$$\Delta T = T_{BA} - T_{AB} = (TA_B + ToF_{BA} + TR_A) - (TA_A + ToF_{AB} + TR_B).$$

On voit bien que les temps d'allumage et les temps de réception interviennent dans l'estimation de la vitesse de l'eau, et qu'une dérive des temps d'allumage et/ou des temps de réception a un impact sur la précision de la mesure.

On se placera tout d'abord dans un cas où la dérive des temps d'allumage est négligeable par rapport à la dérive des temps de réception.

La compensation consiste à utiliser le premier miroir réflecteur 15a et le deuxième miroir réflecteur 15b pour estimer la dérive des temps de réception du premier transducteur 14a et du deuxième transducteur 14b.

Le premier transducteur 14a joue tout d'abord le rôle d'un émetteur puis d'un récepteur.

Un premier signal ultrasonore de compensation, semblable au signal ultrasonore de mesure Se évoqué plus tôt, est émis par le premier transducteur 14a.

Le premier signal ultrasonore de compensation parcourt un premier trajet de compensation au cours duquel le premier signal ultrasonore de compensation est réfléchi par le premier miroir réflecteur 15a, puis est reçu par le premier transducteur 14a. Le premier trajet de compensation est donc un trajet aller-retour entre le premier transducteur 14a et le premier miroir réflecteur 15a.

Les moyens de traitement 18 mesurent alors un premier temps de trajet de compensation mis par le premier signal ultrasonore de compensation pour parcourir le premier trajet de compensation.

Le « premier temps de trajet de compensation » est en réalité un premier temps de transfert local $TL_A$.

Le premier temps de transfert local $TL_A$ est estimé de la même manière que les temps de trajet de mesure (ou, plus exactement, que les temps de transfert global $T_{AB}$ et $T_{BA}$), c'est-à-dire à partir de la détermination du moment de survenue du cinquième lobe prédéterminé du premier signal ultrasonore de compensation réfléchi et reçu par le premier transducteur 14a.

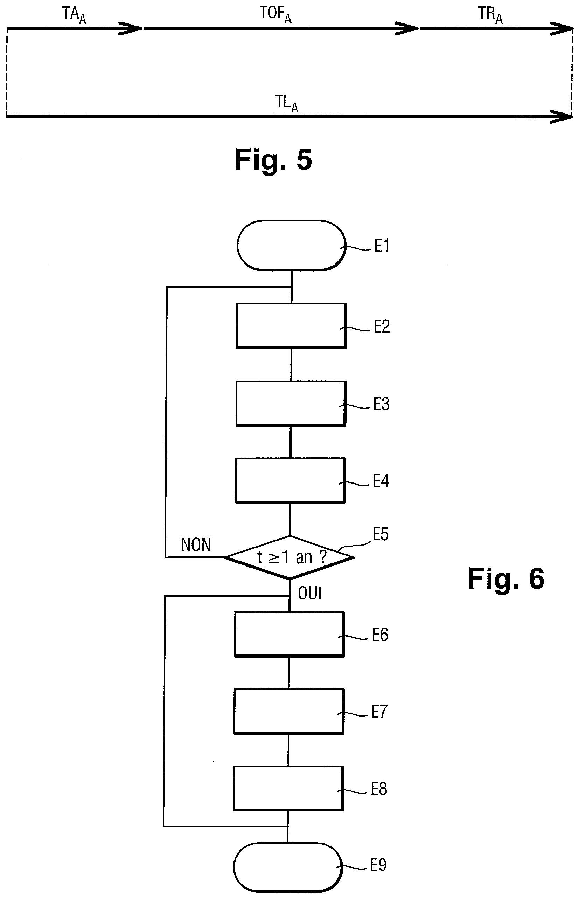

En référence à la figure 5, le premier temps de transfert local $TL_A$ est égal à :

$$TL_A = TA_A + ToF_{AA} + TR_A,$$

où :

- $TA_A$ est le temps d'allumage du premier transducteur 14a ;
- $TOFA_A$ correspond au *Time of Flight* (« Temps de Vol », en français) mis par le premier signal ultrasonore de compensation pour parcourir le premier trajet de compensation entre le premier transducteur 14a et le premier transducteur 14a via le premier miroir réflecteur 15a ;
- $TR_A$ est le temps de réception du premier transducteur 14a.

Du fait de la distance entre le premier transducteur 14a et le premier miroir réflecteur 15a (ici égale à 6mm, soit 12mm pour le trajet aller-retour), et en considérant la vitesse d'une onde ultrasonore dans l'eau (environ 1500m/s), le *Time of Flight* $ToF_M$ est de l'ordre de 8µs.

L'anneau piézoélectrique du premier transducteur 14a est excité par un signal rectangulaire pendant une durée de 8µs maximum, de sorte que le premier transducteur 14a ait cessé d'émettre pour écouter l'écho associé à la réflexion du premier signal ultrasonore de compensation, et donc pour recevoir le premier signal ultrasonore de compensation après sa réflexion par le premier miroir réflecteur 15a.

Ensuite, le deuxième transducteur 14b joue à son tour le rôle d'un émetteur puis d'un récepteur. Un deuxième signal ultrasonore de compensation est émis par le deuxième transducteur 14b.

Les moyens de traitement 18 évaluent alors un deuxième temps de transfert local $TL_B$ entre le deuxième transducteur 14b et lui-même, via le deuxième miroir réflecteur 15b.

Le deuxième temps de transfert local $TL_B$ est égal à :

$$TL_B = TA_B + ToF_{BB} + TR_B,$$

où :

- $T_{AB}$ est le temps d'allumage du deuxième transducteur 14b ;
- $ToF_{BB}$ correspond au *Time of Flight* (« Temps de Vol », en français) mis par le deuxième signal ultrasonore de compensation pour parcourir deuxième trajet de compensation entre le deuxième transducteur 14b et le deuxième transducteur 14b via le deuxième miroir réflecteur 15b ;
- $TR_B$ est le temps de réception du deuxième transducteur 14b.

Du fait de la distance entre le deuxième transducteur 14b et le deuxième miroir réflecteur 15b (ici égale à 6mm, soit 12mm pour le trajet aller-retour), et en considérant la vitesse d'une onde ultrasonore dans l'eau (environ 1500m/s), le *Time of Flight* $ToF_{BB}$ est de l'ordre de 8µs.

La compensation est donc réalisée à partir du premier temps de transfert local $TL_A$ et du deuxième temps de transfert local $TL_B$.

On note cependant que les *Time of Flight* dépendent de la température de l'eau. La compensation utilise donc aussi des temps de référence $TL_{A\_Ref}$ et $TL_{B\_Ref}$. Les temps de référence $TL_{A\_Ref}$ et $TL_{B\_Ref}$ sont des temps de transfert locaux mesurés alors que le vieillissement est négligeable, à une température identique à celle de l'eau au moment où la compensation est réalisée.

Les moyens de traitement 18 calculent ainsi :

- $\Delta T_A = TL_A - TL_{A\_Ref}$ et
- $\Delta T_B = TL_B - TL_{B\_Ref}$.

Or, comme la dérive des temps d'allumage est négligeable par rapport à la dérive des temps de réception, on peut considérer en première approximation que les temps d'allumage n'évoluent pas.

On a donc :

- $\Delta T_A = TR_A - TR_{A\_Ref}$ ;
- $\Delta T_B = TR_B - TR_{B\_Ref}$

On compense alors les dérives de mesure dues au vieillissement du premier transducteur 14a et du deuxième transducteur 14b en retranchant, dans la différence $\Delta T = T_{BA} - T_{AB}$ utilisée pour estimer la vitesse de l'eau, $\Delta T_B$ à $T_{AB}$ et $\Delta T_A$ à $T_{BA}$.

Alternativement, on peut se placer dans un cas où la dérive des temps de réception est négligeable par rapport à la dérive des temps d'allumage.

Les moyens de traitement 18 calculent ainsi :

- $\Delta T_A = TL_A - TL_{A\_Ref}$ et
- $\Delta T_B = TL_B - TL_{B\_Ref}$.

Or, comme la dérive des temps de réception est négligeable par rapport à la dérive des temps de d'allumage, on peut considérer en première approximation que les temps de réception n'évoluent pas.

On a donc :

- $\Delta T_A = TA_A - TA_{A\_Ref}$ ;
- $\Delta T_B = TA_B - TA_{B\_Ref}$.

On compense alors les dérives de mesure dues au vieillissement du premier transducteur 14a et du deuxième transducteur 14b en retranchant, dans la différence $\Delta T = T_{BA} - T_{AB}$ utilisée pour estimer la vitesse de l'eau, $\Delta T_A$ à $T_{AB}$ et $\Delta T_B$ à $T_{BA}$.

On vient donc de décrire le principe général de la compensation. On décrit maintenant la mise en œuvre pratique des phases de compensation. On verra que les phases de compensation comportent des phases d'apprentissage et des phases de compensation effective.

Chaque phase de compensation est mise en œuvre entre deux phases de mesure. Chaque phase de compensation est destinée à compenser la mesure de la vitesse de l'eau réalisée au cours de la phase de mesure qui précède ladite phase de compensation.

A noter qu'afin d'améliorer les précisions de mesures, chaque mesure ultrasonique est, à un instant donné, répétée quelques dizaines de fois (typiquement 80 fois) et moyennée arithmétiquement afin d'en déduire la mesure qui sera retenue.

En référence à la figure 6, les phases de compensation comprennent tout d'abord une (unique) étape d'initialisation (étape E1), qui fait suite à l'installation et à la mise en marche du compteur de fluide à ultrason 10. Au cours de l'étape d'initialisation, une variable « t » est initialisée à zéro. La valeur de la variable t est incrémentée en fonction d'une sortie d'un compteur, de sorte que la variable t mesure le temps écoulé à partir de l'étape d'initialisation.

Suite à l'étape d'initialisation, les premières phases de compensation sont des phases d'apprentissage.

Au cours de chaque phase d'apprentissage, le capteur de température 13 du compteur de fluide à ultrason 10 mesure la température de l'eau et produit une température de référence qui est acquise par les moyens de traitement 18 (étape E2).

Les moyens de traitement 18 pilotent alors le premier transducteur 14a pour qu'il joue le rôle d'un émetteur puis d'un récepteur.

Un premier signal ultrasonore de référence est émis par le premier transducteur 14a, et parcourt le premier trajet de compensation. Les moyens de traitement 18 mesurent alors un premier temps de référence mis par le premier signal ultrasonore de référence pour parcourir le premier trajet de compensation.

Ensuite, les moyens de traitement 18 pilotent le deuxième transducteur 14b pour qu'il joue à son tour le rôle d'un émetteur puis d'un récepteur.

Un deuxième signal ultrasonore de référence est émis par le deuxième transducteur 14b, et parcourt le deuxième trajet de compensation. Les moyens de traitement 18 mesurent alors un deuxième temps de référence mis par le deuxième signal ultrasonore de référence pour parcourir le deuxième trajet de compensation (étape E3).

Le premier signal ultrasonore de référence et le deuxième signal ultrasonore de référence sont émis à des instants suffisamment éloignés pour que la mesure du premier temps de référence et la mesure du deuxième temps de référence ne se perturbent pas.

La température de référence, le premier temps de référence et le deuxième temps de référence sont alors intégrés dans une table de référence qui est stockée dans la mémoire 20 des moyens de traitement 18 (étape E4).

Les index de la table de référence sont donc les valeurs de température de référence. Les valeurs de température de référence sont ici acquises et stockées avec un pas de 1°C.

Puis, la variable t est comparée à une durée prédéterminée, qui est ici égale à 1 an (étape E5). Si la valeur de la variable t est inférieure à la durée prédéterminée de 1 an, le processus qui vient d'être décrit est répété au cours de la prochaine phase de compensation. La prochaine phase de compensation est donc à nouveau une phase d'apprentissage.

On comprend donc que les phases d'apprentissage sont mises en œuvre uniquement pendant une période préliminaire de durée prédéterminée, ici égale à 1 an. Au cours de ces phases d'apprentissage, aucune compensation n'est effectivement réalisée, car le vieillissement du premier transducteur 14a et du deuxième transducteur 14b est négligeable pendant la durée prédéterminée. Les phases d'apprentissage sont donc utilisées pour remplir la table de référence de la mémoire 20 avec les températures de référence, les premiers temps de référence et les deuxièmes temps de référence.

En revenant à l'étape E5, lorsque la valeur de la variable t devient supérieure ou égale à la durée prédéterminée de 1 an, la prochaine phase de compensation est une phase de compensation effective.

Au cours d'une phase de compensation effective, le capteur de température 13 du compteur de fluide à ultrason 10 mesure la température de l'eau (étape E6). La température de l'eau obtenue est considérée comme étant égale à une température de mesure de l'eau au cours de la phase de mesure qui précède la phase de compensation effective.

Puis, les moyens de traitement 18 mesurent le premier temps de trajet de compensation et le deuxième temps de trajet de compensation (étape E7).

Ensuite, les moyens de traitement 18 extraient de la table de référence un premier temps de référence et un deuxième temps de référence qui correspondent à une température de référence identique à la température de mesure.

Les moyens de traitement 18 calculent alors le $\Delta T_A$ et le $\Delta T_B$ évoqués plus tôt, et compensent la dérive de mesure du premier transducteur 14a et du deuxième transducteur 14b en ajustant le temps de trajet de mesure d'amont en aval (ou, plus exactement, le temps de transfert global d'amont en aval) et le temps de trajet de mesure d'aval en amont (ou, plus exactement, le temps de transfert global d'aval en amont) grâce au $\Delta T_A$ et au $\Delta T_B$ (étape E8).

La phase de compensation suivante est à nouveau une phase de compensation effective : l'étape E6 fait suite à l'étape E8. La totalité des phases de compensation qui suivent sont des phases de compensation effective, jusqu'à une étape finale (unique) correspondant la fin de vie, le remplacement ou la mise en œuvre d'une opération de maintenance sur le compteur de fluide à ultrason 10 (étape E9).

Alternativement, il est possible de ne pas réaliser de phase d'apprentissage, et de remplir la table de référence préalablement à l'installation du compteur de fluide à ultrason 10.

La table de référence peut alors être remplie au moment de la conception du compteur de fluide à ultrason 10. Une table de référence unique est alors utilisée pour tous les compteurs de fluide à ultrason 10 d'un même modèle.

La table de référence peut aussi être remplie en usine, au moment de la fabrication du compteur de fluide à ultrason 10, par des opérations de calibration.

Bien entendu, l'invention n'est pas limitée au mode de réalisation décrit mais englobe toute variante entrant dans le champ de l'invention telle que définie par les revendications.

L'invention n'est bien sûr pas limitée à la mesure de la vitesse de l'eau, mais s'applique à tout type de fluide (par exemple à un gaz ou au pétrole).

Il n'est pas nécessaire d'utiliser deux miroirs réflecteurs pour mettre en œuvre l'invention. Il est parfaitement possible de n'utiliser qu'un seul miroir réflecteur positionné entre le premier transducteur et le deuxième transducteur. Dans ce cas, le premier trajet de compensation est un trajet aller-retour entre le premier transducteur et le miroir réflecteur, et le deuxième trajet de compensation est un trajet aller-retour entre le deuxième transducteur et le miroir réflecteur.

Toutes les valeurs numériques fournies ici sont utilisées pour illustrer l'invention, et peuvent bien sûr être différentes lors de la mise en œuvre de l'invention.

**Revendications**

1. Procédé de mesure d'une vitesse d'un fluide, mis en œuvre par un compteur de fluide à ultrason (10), le compteur de fluide à ultrason comportant un conduit, deux transducteurs (14a, 14b) intégrés dans le conduit, un miroir réflecteur (15a, 15b) positionné entre les deux transducteurs, et des moyens de traitement (18), les transducteurs et le miroir réflecteur présentant chacun une forme annulaire qui épouse une paroi interne du conduit, le procédé de mesure comportant des phases de mesure comprenant chacune des étapes de mesure au cours desquelles :

   - l'un des deux transducteurs émet un signal ultrasonore de mesure ;
   - l'autre des deux transducteurs reçoit le signal ultrasonore de mesure après qu'il ait parcouru un trajet de mesure ;
   - les moyens de traitement (18) évaluent la vitesse du fluide en fonction d'un temps de trajet de mesure mis par le signal ultrasonore de mesure pour parcourir le trajet de mesure ;

EP 3 615 894 B1

le procédé de mesure comportant en outre des phases de compensation comprenant chacune des étapes de compensation au cours desquelles :

- l'un des deux transducteurs émet un signal ultrasonore de compensation ;
- ledit transducteur reçoit le signal ultrasonore de compensation après qu'il ait parcouru un trajet de compensation au cours duquel il a été réfléchi par le miroir réflecteur ;
- les moyens de traitement compensent une dérive de mesure dudit transducteur en ajustant le temps de trajet de mesure en fonction d'un temps de trajet de compensation mis par le signal ultrasonore de compensation pour parcourir le trajet de compensation.

2. Procédé de mesure selon la revendication 1, dans lequel le compteur de fluide à ultrason (10) comporte en outre un capteur de température (13), et dans lequel les moyens de traitement (18) ajustent aussi le temps de trajet de mesure en fonction d'une température de mesure du fluide au cours de la phase de mesure.

3. Procédé de mesure selon la revendication 2, dans lequel le compteur de fluide à ultrason comporte en outre une mémoire (20) dans laquelle est stockée une table de référence comprenant des valeurs de température de référence et, pour chaque valeur de température de référence, un temps de référence mis par un signal ultrasonore de référence pour parcourir le trajet de compensation alors que le vieillissement des transducteurs est négligeable, et dans lequel l'ajustement du temps de trajet de mesure consiste à extraire de la table de référence un temps de référence correspondant à une température de référence identique à la température de mesure, et à ajouter ou à retrancher au temps de trajet de mesure une différence entre le temps de trajet de compensation et le temps de référence.

4. Procédé de mesure selon la revendication 3, dans lequel les phases de compensation comportent des phases d'apprentissage au cours desquelles :

- le capteur de température (13) mesure la température du fluide et produit des températures de référence ;
- pour chaque température de référence, les moyens de traitement (18) mesurent le temps de référence mis par le signal ultrasonore de référence pour parcourir le trajet de compensation, et intègrent dans la table de référence la température de référence et le temps de référence.

5. Procédé de mesure selon la revendication 4, dans lequel les phases d'apprentissage sont mises en œuvre pendant une période préliminaire de durée prédéterminée, qui débute suite à une installation du compteur de fluide à ultrason.

6. Procédé de mesure selon la revendication 3, dans lequel la table de référence est remplie préalablement à une installation du compteur de fluide à ultrason (10).

7. Compteur de fluide à ultrason comportant un conduit, deux transducteurs (14a, 14b) intégrés dans le conduit, un miroir réflecteur (15a, 15b) positionné entre les deux transducteurs, et des moyens de traitement agencés pour mettre en œuvre le procédé de mesure selon la revendication 1, les transducteurs et le miroir réflecteur présentant chacun une forme annulaire qui épouse une paroi interne du conduit.

8. Compteur de fluide à ultrason selon la revendication 7, comportant deux miroirs réflecteurs (15a, 15b), chaque miroir réflecteur étant positionné à proximité de l'un des transducteurs.

9. Compteur de fluide à ultrason selon la revendication 7, dans lequel les transducteurs sont des transducteurs piézoélectriques.

10. Compteur de fluide à ultrason selon la revendication 7, dans lequel une largeur de chaque transducteur est comprise entre 8% et 12% d'un diamètre interne du conduit, et dans lequel une largeur du miroir réflecteur est comprise entre 3% et 5% du diamètre interne du conduit.

11. Programme d'ordinateur comprenant des instructions pour mettre en œuvre, par un compteur de fluide à ultrason selon une des revendications 7-10, le procédé de mesure selon l'une des revendications 1 à 6.

12. Moyens de stockage, **caractérisés en ce qu'**ils stockent un programme d'ordinateur comprenant des instructions pour mettre en œuvre, par un compteur de fluide à ultrason selon une des revendications 7-10, le procédé de mesure selon l'une des revendications 1 à 6.

**Patentansprüche**

1. Messverfahren zum Messen einer Geschwindigkeit eines Fluids, das von einem Ultraschallfluidzähler (10) durchgeführt wird, wobei der Ultraschallfluidzähler eine Leitung, zwei in die Leitung integrierte Wandler (14a, 14b), einen zwischen den beiden Wandlern positionierten reflektierenden Spiegel (15a, 15b) und Verarbeitungsmittel (18) umfasst, wobei die Wandler und der reflektierende Spiegel jeweils eine ringförmige Form aufweisen, die eng an einer Innenwand der Leitung anliegt, wobei das Messverfahren Messphasen umfasst, die jeweils Messschritte umfassen, während denen:

   - einer der beiden Wandler ein Ultraschallmesssignal aussendet;
   - der andere der beiden Wandler das Ultraschallmesssignal empfängt, nachdem es einen Messpfad durchlaufen hat;
   - die Verarbeitungsmittel (18) die Geschwindigkeit des Fluids in Abhängigkeit von einer gemessenen Laufzeit evaluieren, die das Ultraschallmesssignal benötigt, um den Messpfad zu durchlaufen;

   wobei das Messverfahren ferner Kompensationsphasen umfasst, die jeweils Kompensationsschritte umfassen, während denen:

   - einer der beiden Wandler ein Ultraschallkompensationssignal aussendet;
   - der genannte Wandler das Ultraschallkompensationssignal empfängt, nachdem es einen Kompensationspfad durchlaufen hat, während dessen es von dem reflektierenden Spiegel reflektiert worden ist;
   - die Verarbeitungsmittel eine Messdrift des genannten Wandlers kompensieren, indem sie die gemessene Laufzeit in Abhängigkeit von einer Kompensationslaufzeit anpassen, die das Ultraschallkompensationssignal benötigt, um den Kompensationspfad zu durchlaufen.

2. Messverfahren nach Anspruch 1, bei dem der Ultraschallfluidzähler (10) ferner einen Temperatursensor (13) umfasst, und bei dem die Verarbeitungsmittel (18) auch die gemessene Laufzeit in Abhängigkeit von einer Messtemperatur des Fluids während der Messphase anpassen.

3. Messverfahren nach Anspruch 2, bei dem der Ultraschallfluidzähler ferner einen Speicher (20) umfasst, in dem eine Referenztabelle gespeichert ist, die Referenztemperaturwerte umfasst, sowie für jeden Referenztemperaturwert eine Referenzzeit, die das Referenzultraschallsignal benötigt, um den Kompensationspfad zu durchlaufen, wenn die Alterung der Wandler vernachlässigbar ist, und bei dem die Anpassung der gemessenen Laufzeit darin besteht, aus der Referenztabelle eine Referenzzeit zu extrahieren, die einer Referenztemperatur entspricht, die identisch zur Messtemperatur ist, und eine Differenz zwischen der Kompensationslaufzeit und der Referenzzeit zur gemessenen Laufzeit hinzuzufügen oder von ihr abzuziehen.

4. Messverfahren nach Anspruch 3, bei dem die Kompensationsphasen Lernphasen umfassen, während denen:

   - der Temperatursensor (13) die Temperatur des Fluids misst und Referenztemperaturen erzeugt;
   - die Verarbeitungsmittel (18) für jede Referenztemperatur die Referenzzeit messen, die das Referenzultraschallsignal benötigt, um den Kompensationspfad zu durchlaufen, und die Referenztemperatur und die Referenzzeit in die Referenztabelle integrieren.

5. Messverfahren nach Anspruch 4, bei dem die Lernphasen während einer Vorperiode vorbestimmter Dauer durchgeführt werden, die nach einer Installation des Ultraschallfluidzählers beginnt.

6. Messverfahren nach Anspruch 3, bei dem die Referenztabelle vor einer Installation des Ultraschallfluidzählers (10) ausgefüllt wird.

7. Ultraschallfluidzähler, umfassend eine Leitung, zwei in die Leitung integrierte Wandler (14a, 14b), einen zwischen den beiden Wandlern positionierten reflektierenden Spiegel (15a, 15b) und Verarbeitungsmittel, die ausgebildet sind, um das Messverfahren nach Anspruch 1 durchzuführen, wobei die Wandler und der reflektierende Spiegel jeweils eine ringförmige Form aufweisen, die sich eng an eine Innenwand der Leitung anlegt.

8. Ultraschallfluidzähler nach Anspruch 7, umfassend zwei reflektierende Spiegel (15a, 15b), wobei jeder reflektierende Spiegel in der Nähe eines der Wandler positioniert ist.

**9.** Ultraschallfluidzähler nach Anspruch 7, bei dem die Wandler piezoelektrische Wandler sind.

**10.** Ultraschallfluidzähler nach Anspruch 7, bei dem eine Breite jedes Wandlers zwischen 8% und 12% eines Innendurchmessers der Leitung beträgt, und bei dem eine Breite des reflektierenden Spiegels zwischen 3% und 5% des Innendurchmessers der Leitung beträgt.

**11.** Computerprogramm, umfassend Anweisungen zum Durchführen des Messverfahrens nach einem der Ansprüche 1 bis 6 mittels eines Ultraschallfluidzählers nach einem der Ansprüche 7-10.

**12.** Speichermittel, **dadurch gekennzeichnet, dass** sie ein Computerprogramm speichern, das Anweisungen zum Durchführen des Messverfahrens nach einem der Ansprüche 1 bis 6 mittels eines Ultraschallfluidzählers nach einem der Ansprüche 7-10 umfassen.

**Claims**

**1.** A method of measuring a speed of a fluid, the method being performed by an ultrasonic fluid meter (10), the ultrasonic fluid meter having a duct, two transducers (14a, 14b) integrated in the duct, a reflector mirror (15a, 15b) positioned between the two transducers, and processor means (18), each of the two transducers and the reflector mirror is annular in shape and fits closely to an inside wall of the duct, the measurement method comprising measurement stages, each comprising measurement steps, during which:

- one of the two transducers emits an ultrasound measurement signal;
- the other one of the two transducers receives the ultrasound measurement signal after it has travelled along a measurement path;
- the processor means (18) evaluate the speed of the fluid as a function of a measured time of flight taken by the ultrasound measurement signal to travel along the measurement path;

the measurement method further comprising compensation stages, each comprising compensation steps, during which:

- one of the two transducers emits an ultrasound compensation signal;
- said transducer receives the ultrasound compensation signal after it has travelled along a compensation path during which it is reflected by the reflector mirror;
- the processor means compensate any measurement drift of said transducer by adjusting the measured time of flight as a function of a compensation time of flight taken by the ultrasound compensation signal to travel along the compensation path.

**2.** A measurement method according to claim 1, wherein the ultrasonic fluid meter (10) also includes a temperature sensor (13), and wherein the processor means (18) also adjust the measured time of flight as a function of a measured temperature of the fluid during the measurement stage.

**3.** A measurement method according to claim 2, wherein the ultrasonic fluid meter further includes a memory (20) storing a reference table comprising reference temperature values, and together with each reference temperature value, a reference time taken by an ultrasound reference signal to travel along the compensation path when the ageing of the transducers is negligible, and wherein the adjustment of the measured time of flight consists in extracting a reference time from the reference table corresponding to a reference temperature identical to the measured temperature, and in adding to or subtracting from the measured time of flight a difference between the compensation time of flight and the reference time.

**4.** A measurement method according to claim 3, wherein the compensation stages include training stages, during which:

- the temperature sensor (13) measures the temperature of the fluid and produces reference temperatures;
- for each reference temperature, the processor means (18) measure the reference time taken by the ultrasound reference signal to travel along the compensation path, and incorporate the reference temperature and the reference time in the reference table.

**5.** A measurement method according to claim 4, wherein the training stages are performed during a preliminary period of predetermined duration that begins after installing the ultrasonic fluid meter.

6. A measurement method according to claim 3, wherein the reference table is filled in prior to installing the ultrasonic fluid meter (10).

7. An ultrasonic fluid meter comprising a duct, two transducers (14a, 14b) integrated in the duct, a reflector mirror (15a, 15b) positioned between the two transducers,, and processor means arranged to perform the measurement method according to claim 1, each of the two transducers and the reflector mirror is annular in shape and fits closely to an inside wall of the duct.

8. An ultrasonic fluid meter according to claim 7, including two reflector mirrors (15a, 15b), each reflector mirror being positioned in the proximity of a respective one of the transducers.

9. An ultrasonic fluid meter according to claim 7, wherein the transducers are piezoelectric transducers.

10. An ultrasonic fluid meter according to claim 7, wherein the width of each transducer lies in the range 8% to 12% of an inside diameter of the duct, and wherein the width of the reflector mirror lies in the range 3% to 5% of the inside diameter of the duct.

11. A computer program including instructions for enabling an ultrasonic fluid meter according to any one of claims 7 to 10 to perform the measurement method according to any one of claims 1 to 6.

12. Storage means **characterized in that** they store a computer program including instructions for enabling an ultrasonic fluid meter according to any one of claims 7 to 10 to perform the measurement method according to any one of claims 1 to 6.

**Fig. 1 - Art antérieur**

Fig. 2

**Fig. 3**

**Fig. 4**

EP 3 615 894 B1

$$\xrightarrow{\quad TA_A \quad} \xrightarrow{\quad\quad TOF_A \quad\quad} \xrightarrow{\quad TR_A \quad}$$

$$\xrightarrow{\hspace{8cm} TL_A \hspace{8cm}}$$

## Fig. 5

E1

E2

E3

E4

NON ← t ≥ 1 an ? — E5

OUI

E6

E7

E8

E9

## Fig. 6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2012266676 A1